# EUROPÄISCHE PATENTANMELDUNG

(11) **EP 1 753 002 A2**
(43) Veröffentlichungstag der Anmeldung: **14.02.2007**
(21) Anmeldenummer: 06016499.3
(22) Anmeldetag: 08.08.2006
(51) Int. Cl.: H01H 35/14

(54) **Elektrischer Schalter**

(30) Priorität: 10.08.2005 DE 202005012548 U
(71) Anmelder: Pommer, Fredi Alexander, 42857 Remscheid (DE)
(72) Erfinder: Pommer, Fredi Alexander, 42857 Remscheid (DE)
(74) Vertreter: Hauck, Graalfs, Wehnert, Döring, Siemons

(57) **Zusammenfassung**

Es wird eine elektrische Schaltung zur bewegungsabhängigen Ansteuerung eines in oder an einer beweglichen Einheit angeordneten Objektes beschrieben. Die Schaltung weist einen Fliehkraftschalter auf, der ein mit einer Ausnehmung versehenes Gehäuse besitzt, in der ein als träge Masse ausgebildeter, elektrisch leitender Gleitkörper hin- und herbewegbar ist. Der Gleitkörper wird von einer elastischen Einrichtung in eine Ausgangsstellung vorgespannt, in der er mit einem ersten Schleifkontakt der elektrischen Schaltung in Kontakt steht. Bei einem bestimmten Verzögerungswert der beweglichen Einheit überwindet der Gleitkörper den Druck der elastischen Einrichtung und tritt zusätzlich zum ersten Schleifkontakt mit mindestens einem zweiten Schleifkontakt in Berührung, um die unterbrochene elektrische Schaltung zu schließen.

## Beschreibung

Die vorliegende Erfindung betrifft eine Schaltung zur bewegungsabhängigen Ansteuerung eines in oder an einer beweglichen Einheit angeordneten Objektes.

Mit einer derartigen Schaltung wird bezweckt, einen Steuervorgang in bezug auf ein Objekt in Abhängigkeit von der Bewegung der Einheit, in oder an der das Objekt angeordnet ist, zu bewirken. Bei einem derartigen Steuervorgang kann es sich beispielsweise um das Ein- oder Ausschalten des zu steuernden Objektes handeln. Die bewegliche Einheit kann beispielsweise ein Fahrzeug sein. Ein spezieller Anwendungsfall betrifft das Ansteuern eines in oder an einem Fahrzeug angeordneten Objektes in Abhängigkeit von einem Verzögerungsvorgang des Fahrzeuges.

Der Erfindung liegt die Aufgabe zugrunde, eine elektrische Schaltung der angegebenen Art zu schaffen, die bei kompakter Bauweise besonders einfach ausgebildet und zu montieren ist.

Diese Aufgabe wird erfindungsgemäß bei einer Schaltung der angegebenen Art durch die folgenden Merkmale gelöst:
die Schaltung weist einen Fliehkraftschalter auf, der in der nachfolgenden Weise ausgebildet ist:
   er besitzt ein mit einer Ausnehmung versehenes Gehäuse, in der ein als träge Masse ausgebildeter, elektrisch leitender Gleitkörper hin- und herbewegbar ist;
   der Gleitkörper wird von einer elastischen Einrichtung in eine Ausgangsstellung vorgespannt, in der er mit einem ersten Schleifkontakt der elektrischen Schaltung in Kontakt steht;
   bei einem bestimmten Verzögerungswert der beweglichen Einheit überwindet der Gleitkörper den Druck der elastischen Einrichtung und tritt zusätzlich zum ersten Schleifkontakt mit mindestens einem zweiten Schleifkontakt in Berührung, um die unterbrochene elektrische Schaltung zu schließen; und
die elastische Einrichtung ist so eingestellt, daß sie den Gleitkörper in die Ausgangsstellung zurückbewegt, wenn der dem Verzögerungswert entsprechende, auf die elastische Einrichtung ausgeübte Druck des Gleitkörpers geringer wird als der von der elastischen Einrichtung ausgeübte Druck.

Die erfindungsgemäß ausgebildete elektrische Schaltung enthält somit einen Fliehkraftschalter, der in der vorstehend beschriebenen Weise ausgebildet ist. Der Schalter ist einfach ausgebildet, da er im wesentlichen nur aus einem Gehäuse mit einer Ausnehmung, einem in der Ausnehmung gleitend bewegbaren Gleitkörper, einer elastischen Einrichtung und mindestens zwei Schleifkontakten besteht. Ab einem bestimmten Verzögerungswert der die elektrische Schaltung aufweisenden Einheit, insbesondere eines Fahrzeuges, wird der Gleitkörper aufgrund seiner Trägheit aus seiner Ausgangsstellung gegen die von der elastischen Einrichtung ausgeübte Kraft heraus bewegt und stellt eine elektrische Verbindung vom ersten Schleifkontakt über den Gleitkörper zum mindestens zweiten Schleifkontakt her, so daß die zur Ansteuerung des Objektes dienende elektrische Schaltung geschlossen wird. Auf diese Weise wird beispielsweise das anzusteuernde Objekt eingeschaltet. Wenn nach einer bestimmten Zeitspanne der von der elastischen Einrichtung gegen den Gleitkörper ausgeübte Druck größer wird als der vom Gleitkörper ausgeübte Druck bewegt die elastische Einrichtung den Gleitkörper wieder in seine Ausgangsstellung zurück, so daß die elektrische Verbindung unterbrochen wird. Hierdurch wird das anzusteuernde Objekt beispielsweise wieder ausgeschaltet.

Wie bereits erwähnt, handelt es sich bei der Einheit, die die elektrische Schaltung aufweist, vorzugsweise um ein Kraftfahrzeug. Der Fliehkraftschalter wird dabei vorzugsweise in Abhängigkeit von der Bremsverzögerung des Kraftfahrzeuges betätigt.

Vorzugsweise schaltet die erfindungsgemäß ausgebildete elektrische Schaltung das Schaltrelais oder den Multitimer einer Bremslichtintervallschaltung ein und aus. Eine Bremslichtintervallschaltung bei einem Fahrzeug bewirkt, daß bei einer bestimmten Verzögerung des Fahrzeuges das Bremslicht über eine bestimmte Zeitspanne intervallartig aufleuchtet. Nach Beendigung dieser Zeitspanne erfolgt in herkömmlicher Weise ein konstantes Aufleuchten des Bremslichtes. Das intervallartige Aufleuchten des Bremslichtes über die erwähnte Zeitspanne wird von einem Schaltrelais oder einem Multitimer bewirkt, der durch die in Rede stehende elektrische Schaltung mit dem Fliehkraftschalter ein- und ausgeschaltet wird. Mit anderen Worten, nach einem bestimmten Verzögerungswert des Fahrzeuges erfolgt über den Fliehkraftschalter das Einschalten des Schaltrelais oder Multitimers, so daß die Phase des intervallartigen Aufleuchtens des Bremslichtes begonnen wird. Wird der Verzögerungswert unterschritten, bewegt sich der Gleitkörper des Fliehkraftschalters wieder in seine Ausgangsstellung zurück und unterbricht die Schaltung, so daß auf diese Weise die Zeitspanne zum intervallartigen Aufleuchten des Bremslichtes beendet wird. Wie erwähnt, kann dann das Bremslicht in bekannter Weise kontinuierlich aufleuchten.

Eine derartige Bremslichtschaltung zum Intervallbetrieb des Bremslichtes ist beispielsweise in der DE-GM 202 20 556.8 beschrieben, auf die hiermit Bezug genommen wird. Auf eine weitergehende Beschreibung der bekannten Bremslichtschaltung wird hier verzichtet. Der Einsatz der erfindungsgemäß ausgebildeten Schaltung bei einer derartigen Bremslichtschaltung stellt einen besonders bevorzugten Anwendungsfall der vorliegenden Erfindung dar.

In Weiterbildung der Erfindung ist der von der elastischen Einrichtung, bei der es sich vorzugsweise um eine Druckfeder handelt, ausgeübte Druck einstellbar. Hierzu kann beispielsweise eine Stellschraube dienen, die ein manuelles Einstellen des von der elastischen Einrichtung ausgeübten Drucks ermöglicht, indem beispielsweise eine verwendete Druckfeder mehr oder weniger komprimiert wird.

Bei der erfindungsgemäßen Lösung werden die Schleifkontakte vorzugsweise von federbelasteten Kontaktkugeln gebildet, die geringfügig in die Ausnehmung vorstehen. Durch den Gleitkontakt des Gleitkörpers mit den Kontaktkugeln wird der gewünschte elektrische Kontakt hergestellt. Auch die auf die Kontaktkugeln ausgeübte Federbelastung ist vorzugsweise einstellbar, beispielsweise ebenfalls mit Hilfe einer Stellschraube.

In Weiterbildung der Erfindung besitzt die Schaltung eine die Rückbewegung des Gleitkörpers in seine Ausgangsstellung abbremsende Bremse. Mit einer derartigen Bremse ist es möglich, die Rückbewegung des Gleitkörpers in seine Ausgangsstellung zu verzögern und auf diese Weise die Kontaktzeit des Gleitkörpers mit dem mindestens zweiten Schleifkontakt zu verlängern. Ohne die Anordnung einer derartigen Bremse würde der Gleitkörper bei Unterschreiten des vorgegebenen Verzögerungswertes relativ rasch in seine Ausgangsstellung zurückgeführt werden, so daß die Zeitspanne über die die Schaltung geschlossen wird, relativ kurz ist. Diese Zeitspanne läßt sich durch die vorgesehene Bremse verlängern, so daß beispielsweise die Zeitspanne, über die das Bremslicht intervallartig aufleuchtet, verlängert werden kann.

Die Bremse besitzt vorzugsweise eine federbelastete Kontaktkugel, die geringfügig in die Ausnehmung vorsteht und auf den Gleitkörper einen Druck ausübt. Dieser Druck wirkt dem von der elastischen Einrichtung auf den Gleitkörper ausgeübten Druck entgegen, so daß die Rückwärtsbewegung des Gleitkörpers verzögert wird. Der von der Bremse gegen den Gleitkörper ausgeübte Druck ist vorzugsweise einstellbar, beispielsweise über eine manuell verstellbare Stellschraube, mit der die die Kontaktkugel beaufschlagende Feder mehr oder weniger komprimiert werden kann.

Die erfindungsgemäß ausgebildete elektrische Schaltung, d.h. der Fliehkraftschalter, kann somit vorzugsweise in elektrischen Schaltkreisen im Niederspannungsbereich zum Ansteuern bestimmter Objekte (Ein- und Ausschalten, Durchführung bestimmter Schalt-, Steuer- und Regelvorgänge) eingesetzt werden. Ein bevorzugter Anwendungsfall ist der Einsatz in einem Kraftfahrzeug zur Einschaltung bzw. Regelung des pulsierenden Bremslichtes ab einem bestimmten Verzögerungswert der Abbremsung des Fahrzeuges.

Der Multitimer (Relais) des zeitbegrenzten Intervallbremslichtes wird durch die neuerungsgemäße Schaltung (Fliehkraftschalter) ab einem bestimmten Verzögerungswert dadurch aktiviert, daß vom Gleitkörper über den zweiten Schleifkontakt zur Minusleitung des Multitimers (Relais) eine Verbindung hergestellt wird. Dies bewirkt, daß der Multitimer das Bremslicht auf Impulsbetrieb schaltet. Wenn der Fliehkraftschalter wieder ausschaltet, wird die Verbindung zum zweiten Schleifkontakt unterbrochen, so daß das Bremslicht wieder normal aufleuchtet.

Es versteht sich, daß die erfindungsgemäße Schaltung nicht auf den vorstehend beschriebenen Anwendungsfall beschränkt ist. So können auch andere Funktionen, insbesondere in Kraftfahrzeugen, bewegungsabhängig gesteuert werden. Hierzu können beispielsweise auch mehrere Schleifkontakte in unterschiedlichen Abständen angeordnet sein.

Die erfindungsgemäß ausgebildete Schaltung wird nachfolgend anhand von zwei Ausführungsbeispielen, die den Fliehkraftschalter zeigen, im einzelnen beschrieben. Es zeigen:
- Figur 1: eine erste Ausführungsform eines in der Schaltung verwendeten Fliehkraftschalters im Längsschnitt; und
- Figur 2: eine zweite Ausführungsform eines in der Schaltung verwendeten Fliehkraftschalters im Längsschnitt.

Die erfindungsgemäß ausgebildete elektrische Schaltung zur bewegungsabhängigen Ansteuerung eines in oder an einer beweglichen Einheit angeordneten Objektes weist einen Fliehkraftschalter auf, der in den Figuren schematisch im Längsschnitt dargestellt ist. Die elektrische Schaltung findet in Kraftfahrzeugen zur Betätigung des Bremslichtes in Abhängigkeit von einem Bremsvorgang Verwendung und ist als Intervallschaltung ausgebildet, die die Abgabe von Bremslichtimpulsen bewirkt.

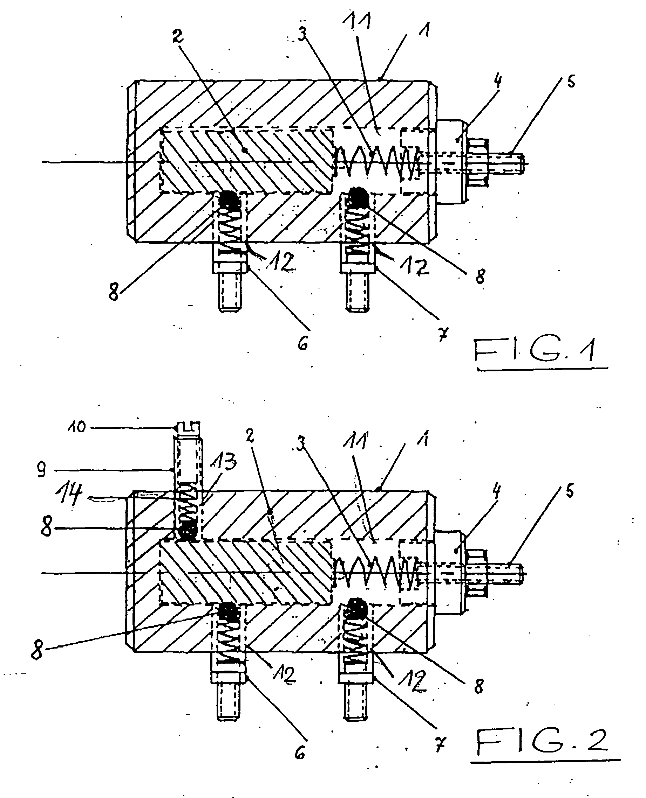

Wie man Figur 1 entnehmen kann, besitzt der in der Schaltung angeordnete Fliehkraftschalter ein zylindrisch ausgebildetes Gehäuse 1 aus Kunststoff, das mit einer zentrischen Längsbohrung 11 versehen ist, die als Sackbohrung ausgebildet ist. In der Bohrung 11 ist ein zylindrisch ausgebildeter Gleitkörper 2 beweglich angeordnet. Der Gleitkörper 2 wird von einer elastischen Einrichtung, die hier als Druckfeder 3 ausgebildet ist, in seine Ausgangsstellung im linken Endbereich der Bohrung vorgespannt. Die Druckfeder 3 stützt sich mit ihrem einen Ende am Gleitkörper 2 und mit ihrem anderen Ende an einem Schließstopfen 4 für die Bohrung 11 ab. Durch den Schließstopfen 4 erstreckt sich eine Stellschraube 5, mit der der Kompressionsgrad der Druckfeder eingestellt werden kann.

Desweiteren weist das Gehäuse 1 zwei kleinere Bohrungen 12 auf, die sich im Abstand voneinander senkrecht zur Bohrung 11 erstrecken und in diese münden. In der in der Figur links angeordneten Bohrung 12 befindet sich ein erster Schleifkontakt 6, der eine Kontaktkugel 8 aufweist, die von einer Feder etwas in die Bohrung 11 hineingedrückt wird. In der in der Figur rechts dargestellten Bohrung 12 befindet sich ein zweiter Schleifkontakt 7, der ebenfalls eine Kontaktkugel 8 besitzt, die von einer Feder etwas in die Bohrung 11 hineingedrückt wird. In Figur 1 steht die Kontaktkugel 8 des ersten Schleifkontaktes mit dem Gleitkörper 2 in Kontakt, während die Kontaktkugel 8 des zweiten Schleifkontaktes 7 nicht mit dem Gleitkörper in Kontakt steht.

Der zweite Schleifkontakt 7 ist an die Minusleitung des Multitimers (nicht dargestellt) der nicht dargestellten Bremslichtschaltung angeschlossen. Der erste Schleifkontakt steht mit einer geeigneten Stromversorgung in Verbindung. Der Gleitkörper 2 besteht aus elektrisch leitendem Material, so daß bei einer Verschiebung des Gleitkörpers in der Figur nach rechts, so daß dieser beide Kontaktkugeln 8 der beiden Schleifkontakte 6 und 7 kontaktiert, eine elektrisch leitende Verbindung über den ersten Schleifkontakt 6, den Gleitkörper 2 und den zweiten Schleifkontakt 7 bis zum Multitimer hergestellt wird, der entsprechend angesteuert bzw. eingeschaltet wird.

Der dargestellte Fliehkraftschalter funktioniert wie folgt. Bei einem Abbremsvorgang des Fahrzeuges, in dem die Schaltung montiert ist, der einem vorgegebenen Verzögerungswert entspricht, wird der Gleitkörper 2 aufgrund seiner trägen Masse gegen den von der Druckfeder 3 ausgeübten Druck in der Figur nach rechts bewegt, so daß er mit dem zweiten Schleifkontakt 7 in Kontakt tritt. Auf diese Weise wird eine elektrisch leitende Verbindung hergestellt und der Multitimer eingeschaltet. Das Bremslicht wird dabei intervallartig betätigt. Nach Ablauf einer bestimmten Zeitspanne, in der der vom Gleitkörper 2 gegen die Druckfeder 3 ausgeübte Druck infolge des absinkenden Verzögerungswertes geringer wird als der von der Druckfeder 3 ausgeübte Druck, bewegt sich der Gleitkörper 2 in der Figur wieder nach links in seine Ausgangsstellung zurück, so daß die Verbindung mit dem zweiten Schleifkontakt 7 unterbrochen wird. Hierdurch wird der Multitimer ausgeschaltet, so daß das Bremslicht wieder normal kontinuierlich leuchtet.

Der in Figur 2 dargestellte Fliehkraftschalter unterscheidet sich von der in Figur 1 gezeigten Ausführungsform nur dadurch, daß der Fliehkraftschalter zusätzlich eine Bremse aufweist, die die Rückwärtsbewegung des Gleitkörpers 2 in seine Ausgangsstellung verzögert. Bei der Bremse handelt es sich im wesentlichen um eine federbelastete Kontaktkugel 8, die in einer senkrecht zur Bohrung 11 verlaufenden Bohrung 13 angeordnet ist, welche in der Figur im linken oberen Teil des Gehäuses 1 angeordnet ist. Die in der Bohrung 13 vorgesehene Druckfeder 14 drückt die Kontaktkugel 8 in Reibeingriff gegen den Gleitkörper 2 und übt somit einen Druck auf diesen aus, der dem von der Druckfeder 3 ausgeübten Druck entgegenwirkt. Hierdurch wird die Rückwärtsbewegung des Gleitkörpers 2 verzögert. Der von der Feder 14 ausgeübte Druck kann über eine Stellschraube 10 in entsprechender Weise wie die Druckfeder 3 eingestellt werden.

Der in Figur 2 dargestellte Fliehkraftschalter funktioniert in der gleichen Weise wie der in Figur 1 dargestellte Schalter, abgesehen davon, daß durch die Bremse 9 die Rückwärtsbewegung des Gleitkörpers 2 entsprechend verzögert wird.

## Patentansprüche

1. Elektrische Schaltung zur bewegungsabhängigen Ansteuerung eines in oder an einer beweglichen Einheit angeordneten Objektes, **dadurch gekennzeichnet, daß** sie einen Fliehkraftschalter aufweist, der in der nachfolgenden Weise ausgebildet ist:
er besitzt ein mit einer Ausnehmung (11) versehenes Gehäuse (1), in der ein als träge Masse ausgebildeter, elektrisch leitender Gleitkörper (2) hin- und herbewegbar ist;
der Gleitkörper (2) wird von einer elastischen Einrichtung (3) in eine Ausgangsstellung vorgespannt, in der er mit einem ersten Schleifkontakt (6) der elektrischen Schaltung in Kontakt steht;
bei einem bestimmten Verzögerungswert der beweglichen Einheit überwindet der Gleitkörper (2) den Druck der elastischen Einrichtung (3) und tritt zusätzlich zum ersten Schleifkontakt (6) mit mindestens einem zweiten Schleifkontakt (7) in Berührung, um die unterbrochene elektrische Schaltung zu schließen; und
die elastische Einrichtung (3) ist so eingestellt, daß sie den Gleitkörper (2) in die Ausgangsstellung zurückbewegt, wenn der dem Verzögerungswert entsprechende, auf die elastische Einrichtung (3) ausgeübte Druck des Gleitkörpers (2) geringer wird als der von der elastischen Einrichtung (3) ausgeübte Druck.

2. Elektrische Schaltung nach Anspruch 1, **dadurch gekennzeichnet, daß** sie das angesteuerte Objekt ein- und ausschaltet.

3. Elektrische Schaltung nach Anspruch 1 oder 2, **dadurch gekennzeichnet, daß** sie Teil eines Kraftfahrzeuges ist und der Fliehkraftschalter in Abhängigkeit von der Bremsverzögerung des Kraftfahrzeuges betätigt wird.

4. Elektrische Schaltung nach einem der vorangehenden Ansprüche, **dadurch gekennzeichnet, daß** der von der elastischen Einrichtung (3) ausgeübte Druck einstellbar ist.

5. Elektrische Schaltung nach einem der vorangehenden Ansprüche, **dadurch gekennzeichnet, daß** die elektrische Einrichtung (3) eine Druckfeder ist.

6. Elektrische Schaltung nach einem der vorangehenden Ansprüche, **dadurch gekennzeichnet, daß** die Schleifkontakte (6, 7) von federbelasteten Kontaktkugeln (8) gebildet sind, die geringfügig in die Ausnehmung (11) vorstehen.

7. Elektrische Schaltung nach einem der vorangehenden Ansprüche, **dadurch gekennzeichnet, daß** sie eine die Rückbewegung des Gleitkörpers (2) in seine Ausgangsstellung abbremsende Bremse (9) aufweist.

8. Elektrische Schaltung nach Anspruch 7, **dadurch gekennzeichnet, daß** die Bremse (9) eine federbelastete Kontaktkugel (8) aufweist, die geringfügig in die Ausnehmung (11) vorsteht.

9. Elektrische Schaltung nach Anspruch 7 oder 8, **dadurch gekennzeichnet, daß** die Bremse (9) einstellbar ist.

10. Elektrische Schaltung nach einem der vorangehenden Ansprüche, **dadurch gekennzeichnet, daß** sie das Schaltrelais oder den Multitimer einer Bremslichtintervallschaltung ein- und ausschaltet.

11. Elektrische Schaltung nach Anspruch 10, **dadurch gekennzeichnet, daß** sie Teil einer Bremsleuchteneinrichtung eines Fahrzeuges ist.
